# EUROPEAN PATENT APPLICATION

(11) **EP 1 152 354 A1**
(43) Date of publication of application: **07.11.2001**
(21) Application number: 00204768.6
(22) Date of filing: 27.12.2000
(51) Int. Cl.: G06F 17/60

(54) **Electronic commerce system for new items**

(30) Priority: 27.04.2000 JP 2000128201
(71) Applicant: Kabushikigaisha Nojima, Sagamihara-shi, Kanagawa 229-1122 (JP)
(72) Inventor: Nojima, Hiroshi, Kabiushikigaisha Nojima, Sagamihara-shi, Kanagawa 229-1122 (JP); Tomine, Yoshiyuki, Kabiushikigaisha Nojima, Sagamihara-shi, Kanagawa 229-1122 (JP)
(74) Representative: Prins, Adrianus Willem

(57) **Abstract**

An electronic commerce system for new items constituted by seller terminals, buyer terminals, an intermediary organ, settlement organ terminals, transport organ terminals, and a two-way communication network for connecting these terminals with the intermediary organ, wherein the intermediary organ is provided with an item information DB for storing item information about new items which have not yet been on the market, a seller information DB for storing information about sellers registered in the intermediary organ, a purchase information DB for storing purchase reservation information and purchase confirmation information from the buyer terminals, an order information DB for storing order reservation information and order confirmation information from the seller terminals, a settlement organ DB for storing information about settlement organs registered in the intermediary organ, a transport organ DB for storing information about transport organs registered in the intermediary organ, a settlement terms storage for storing information about settlement terms sent from the settlement organ terminals, and a transport terms storage for storing information about transport terms sent from the transport organ terminals.

## Description

### BACKGROUND OF THE INVENTION

### Field of the Invention

The present invention relates to an electronic commerce system for making transactions in items through a two-way communication network such as Internet or the like, and particularly relates to an electronic commerce system for new items adapted for making transactions in items which have not yet been on the market.

### Background Art

Recently, an electronic commerce system using a two-way communication network such as Internet or the like has been put into practical use. Electronic commerce is aimed also at items which sellers (a general term for indicating manufacturers, wholesalers, trading companies, retailers or the like who take part in sale of the items) have announced to sell but have not yet brought on the market and the prices of which have not been yet decided (hereunder referred to as "new items").

Such a method of electronic commerce for new items is hitherto carried out as follows. A seller announces the sale of a new item in mass communication, and accepts reservations of purchase from buyers (a general term for indicating individuals, manufacturers, wholesalers, trading companies, or the like who take part in purchase of the items) on a homepage established by the seller.

Incidentally, for example, for transactions in plane tickets, insurance contracts, secondhand cars, etc., other than new items, there is hitherto proposed another method in which an intermediary organ as a third party collects information of various items and provides buyers information of items available on terms closest to buyers' requests, besides the method in which a seller accepts purchase reservations directly from the buyers.

In the method in which a seller accepts purchase reservations directly, buyers have to collect information about items which the buyers want to purchase, and have to investigate sellers who deal in the items. Then, the buyers have to gain access to homepages of the investigated sellers so as to make transactions therewith. Accordingly, there are not only a problem that a large burden is imposed on the buyers but also a problem that it is difficult for the buyers to make transactions on the best terms.

On the other hand, according to the electronic commerce system in which an intermediary organ collecting various item information is laid between sellers and buyers so as to provide the buyers the most advantageous item information in response to buyers' requests, the buyers can obtain item information which agrees with the items desired by the buyers, simply by gaining access to the intermediary organ. Thus, the aforementioned problems can be solved.

However, the background-art electronic commerce system having an intermediary organ involved is aimed at items such as plane tickets, and so on, for which the intermediary organ is not severely required to feed customer information back to sellers. The electronic commerce system cannot be applied to transactions in new items for which the intermediary organ is severely required to feed customer information back to sellers. That is, the reason why sellers accept purchase reservations for new items which have not yet been on the market is that the sellers want to collect basic data required for production plans or inventory control plans, or price setting, or the like, of the new items. Therefore, the intermediary organ is required to feed severe customer data back to the sellers as a part of marketing research. On the other hand, the background-art electronic commerce system having an intermediate organ involved is chiefly aimed at transactions on the best terms for buyers, however, without a function of feeding customer information back to sellers. Therefore, such a system cannot be applied to an electronic commerce system aimed at new items as its transaction targets.

### SUMMARY OF THE INVENTION

The present invention was developed to solve such defectiveness in the background art. It is an object of the present invention to provide an electronic commerce system in which transactions in new items can be done on terms more advantageous to both sellers and buyers.

In order to achieve the above object, according to an aspect of the present invention, there is provided an electronic commerce system for new items comprising seller terminals, buyer terminals, an intermediary organ for making intermediacy for transactions among sellers and buyers, and a two-way communication network for connecting the seller terminals, the buyer terminals and the intermediary organ with one another, the intermediary organ Including: item information storage means for storing item information about new items which have not yet been on the market; seller information storage means for storing information about the sellers registered in the intermediary organ; purchase reservation information storage means for storing purchase reservation information from the buyer terminals; purchase confirmation information storage means for storing purchase confirmation information from the buyer terminals; order reservation information storage means for storing order reservation information from the seller terminals; order confirmation information storage means for storing order confirmation information from the seller terminals; item information sending means for sending necessary item information read from the item information storage means to the buyer terminals in response to requests from the buyer terminals; purchase reservation information sending means for sending necessary purchase reservation information read from the purchase reservation information storage means to the seller terminals in response to requests from the seller terminals; judging means for selecting a seller terminal sending order reservation information most suitable to the purchase reservation information on the basis of the order reservation information stored in the order reservation information storage means; intermediary terms sending means for sending information about intermediary terms claimed by the intermediary organ to the seller terminal selected by the judging means; and control means for controlling the respective means.

With the aforementioned configuration, each buyer can gain access to the item information storage means of the intermediary organ so as to take, into his/her buyer terminal, item information about new items which have not yet been on the market. Thus, the buyer can select a new item which the buyer wants to buy, on the basis of the item information taken in the buyer terminal. When the buyer sends , from the buyer terminal to the intermediary organ, purchase reservation information about the new item which the buyer wants to buy, the purchase reservation information is stored in the purchase reservation information storage means of the intermediary organ. Incidentally, the purchase reservation information is constituted by personal information about the person who wants to buy the item, and purchase terms. The personal information may include the address, the name, the telephone number and the E-mail address of a person. The purchase terms may include the item number, the quantity, and the desired purchase price of an item.

On the other hand, each seller makes an application for seller registration to the intermediary organ while specifying items which the seller deals in. The intermediary organ examines the seller who has made the application, and registers the seller in the seller information storage means for every item that the seller deals in if the seller satisfies certain standards. The seller registered in the seller information storage means can gain access to the purchase reservation information storage means of the intermediary organ so as to take purchase reservation information in the seller terminal. Incidentally, the purchase reservation information storage means reads out not all the purchase reservation information but purchase terms of the purchase reservation information in response to the access from the seller terminal, and sends the purchase terms to the seller terminal. In such a manner, the seller can obtain the number of customers, the quantity of sales, the desired purchase prices of buyers, and so on, about new items which the seller wants to sell. Thus, the seller can collect basic data required for production plans or inventory control plans, or price setting, or the like, of the new items.

After concluding that the seller can provide the items on the terms desired by the buyers, the seller sends order reservation information from the seller terminal to the intermediary organ. The order reservation information is stored in the order reservation information storage means of the intermediary organ. Incidentally, the order reservation information may include the desired selling price of the seller.

When the intermediary organ receives a plurality of order reservation information from a plurality of seller terminals, the intermediary organ makes the judging means compare the purchase reservation information stored in the purchase reservation information storage means with the order reservation information stored in the order reservation information storage means. Thus, on the basis of the purchase reservation information, the intermediary organ selects a seller terminal which sent the most advantageous order reservation information. Incidentally, when there is only one order reservation information, the intermediary organ makes the judging means compare the purchase reservation information stored in the purchase reservation information storage means with the order reservation information stored in the order reservation information storage means so as to judge whether the order reservation information agrees with the purchase reservation information or not. If the judging means concludes that the order reservation information agrees with the purchase reservation information, the intermediary organ selects the seller terminal which has sent agreement with the order reservation information. On the contrary, if there is no order reservation information sent from seller terminals, or if the judging means concludes that no order reservation information agrees with the purchase reservation information, the intermediary organ sends information about no established transaction to the buyer terminal.

When a seller terminal is selected by the judging means, information about intermediary terms such as an intermediate fee, and so on, claimed by the intermediary organ is sent from the intermediary terms sending means to the seller terminal. The intermediary terms are taken in the seller terminal and displayed on display means of the seller terminal.

If the seller concludes that the intermediary terms claimed by the intermediary organ are appropriate, the seller makes the seller terminal send order confirmation information to the intermediary organ. The order confirmation information is stored in the order confirmation information storage means of the intermediary organ. Thus, transaction is established between the intermediary organ and the seller. In response to the establishment of the transaction, the intermediary organ informs the terminal of the buyer who is stored in the purchase reservation information storage means that a seller accepting transaction on the terms desired by the buyer has been detected. The buyer who wants to do transaction makes his/her buyer terminal send purchase confirmation information to the intermediary organ. This purchase confirmation information is stored in the purchase confirmation information storage means of the intermediary organ. Thus, transaction is established between the intermediary organ and the buyer. In response to the establishment of the transaction, the intermediary organ reads, from the purchase reservation information storage means, personal information of the buyer stored in the purchase confirmation information storage means, and sends the personal information to the seller terminal. As a result, the seller can obtain the personal information of the buyer who wants to buy the new item which the seller wants to sell. Thus, the seller can do transaction with the buyer.

In such a manner, according to the electronic commerce system of the present invention, buyers can get information about various new items by gaining access to one intermediary organ. By exchanging necessary information with the intermediary organ, the buyers can carry out reservation and purchase of new items which have not yet been on the market. Therefore, the buyers can obtain the new items easily. In addition, sellers can get, from the intermediary organ, the state of reservation about new items which have not yet been on the market. Accordingly, the sellers can collect basic data required for production plans or inventory control plans, or price setting, or the like, of the new items. Further, the intermediary organ can obtain intermediary fees from the sellers.

The electronic commerce system for new items may be connected to a plurality of settlement organs for making settlement of transactions, through the two-way communication network. In this case, the aforementioned intermediary organ includes: settlement organ information storage means for storing information about the settlement organs registered in the intermediary organ; transaction information sending means for sending transaction information to be settled to the settlement organs stored in the settlement organ information storage means ; settlement terms storage means for storing information about settlement terms provided by the settlement organs to which the transaction information is sent; judging means for selecting a settlement organ which sends settlement terms most advantageous to the buyers on the basis of the settlement terms stored in the settlement terms storage means; and settlement commission information sending means for sending settlement commission information to the settlement organ selected by the judging means.

The intermediary organ sends information of transactions to be settled to settlement organs registered in the settlement organ information storage means. The settlement organs which have received the transaction information send settlement terms such as settlement fees etc., with which transaction can be established, to the intermediary organ. The settlement terms are stored in the settlement terms storage means provided in the intermediary organ. The intermediary organ makes the judging means compare the settlement terms of the respective settlement organs stored in the settlement terms storage means. After selecting a settlement organ sending settlement terms most advantageous to the buyers, the intermediary organ sends settlement commission information to the selected settlement organ. Thus, the intermediary organ can show the buyers the settlement terms which are the most advantageous to the buyers, and the buyers can make settlement of the purchased items on the most advantageous terms. On the other hand, even if sellers do not have any price collection system such as consignment sale companies or the like, the sellers can collect bills surely because the intermediary organ specifies a settlement organ for the sellers.

In addition, a plurality of transport organs for transporting items may be connected to the electronic commerce system for new items through the two-way communication network. In this case, the aforementioned intermediary organ includes: transport organ information storage means for storing information about the transport organs registered in the intermediary organ; transported item information sending means for sending information about items to be transported to the transport organs stored in the transport organ information storage means; transport terms storage means for storing information about transport terms provided by the transport organs to which the transported item information is sent; judging means for selecting a transport organ sending transport terms most advantageous to the buyers on the basis of the transport terms stored in the transport terms storage means; and transport commission information sending means for sending transport commission information to the transport organ selected by the judging means.

The intermediary organ sends information about items to be transported, to transport organs which are registered in the transport organ information storage means. The transport organs which have received the transported item information send transport terms such as transport fees etc., with which transaction can be established, to the intermediary organ. The transport terms are stored in the transport terms storage means provided in the intermediary organ. The intermediary organ makes the judging means compare the transport terms of the respective transport organs stored in the transport terms storage means. After selecting a transport organ which has sent transport terms most advantageous to the buyers , the intermediary organ sends transport commission information to the selected transport organ. Thus, the intermediary organ can present the buyers the transport terms which are the most advantageous to the buyers, and the buyers can accept transportation of items on the most advantageous terms. On the other hand, even if sellers do not have any physical distribution system such as consignment sale companies or the like, the sellers can transport items to the buyers surely because the intermediary organ specifies a transport organ for the sellers.

Further, the intermediary organ in the electronic commerce system for new items may include: purchase reservation information distributing means for regularly or not-regularly distributing purchase reservation information, which is read from the purchase reservation information storage means, to the seller terminals. Thus, the sellers can save time and labor to gain access to the intermediary organ, and can obtain purchase reservation information surely.

Moreover, the intermediary organ in the electronic commerce system for new items may include: buyer information storage means for storing information about the buyers registered in the intermediary organ; and item information distributing means for regularly or not-regularly distributing necessary item information, which is read from the item information storage means, to the buyer terminals. The intermediary organ regularly or not-regularly distributes necessary item information, which is read from the item information storage means, to the terminals of the registered buyers who are read from the buyer information storage means. As a result, the buyers can save time and labor to gain access to the intermediary organ, and can obtain item information about new items surely.

On the other hand, the seller terminals in the electronic commerce system for new items may include new item information sending means for sending, to the intermediary organ, information about new items to be sold by the sellers. The sellers can therefore register item information about new items which the sellers want to sell, in the item information storage means provided in the intermediary organ. Thus, the sellers can obtain purchase reservation information from buyers through the intermediary organ. In addition, the intermediary organ can save time and labor to search the new items and register them in the item information storage means. Thus, the system can be operated efficiently.

### BRIEF DESCRIPTION OF THE DRAWINGS

Fig. 1 is a configuration view of an electronic commerce system according to the present invention;
Fig. 2 is a view showing a configuration example of an intermediary organ;
Fig. 3 is a view showing a configuration example of an item information DB;
Fig. 4 is a view showing a configuration example of a seller information DB;
Fig. 5 is a view showing a configuration example of a purchase information DB;
Fig. 6 is a view showing a configuration example of an order information DB;
Fig. 7 is view showing a configuration example of a settlement organ DB;
Fig. 8 is a view showing a configuration example of a transport organ DB;
Fig. 9 is a view showing a configuration example of a settlement terms storage portion;
Fig. 10 is a view showing a configuration example of a transport terms storage portion;
Fig. 11 is a flow chart of information between an intermediary organ and a seller;
Fig. 12 is a view showing an example of a service menu screen;
Fig. 13 is a view showing an example of a purchase reservation registration screen;
Fig. 14 is a flow chart of information between the intermediary organ and the seller;
Fig. 15 is a view showing an example of an order reservation registration screen;
Fig. 16 is a flow chart of information between the intermediary organ and a settlement organ;
Fig. 17 is a view showing an example of a settlement tender screen;
Fig. 18 is a flow chart of information between the intermediary organ and a transport organ;
Fig. 19 is a view showing an example of a transport tender screen;
Fig. 20 is a flow chart of information among the intermediary organ, the buyer, the seller, the settlement organ and the transport organ; and
Fig. 21 is a view showing an example of a purchase confirmation screen.

### DESCRIPTION OF THE PREFRRED EMBODIMENTS

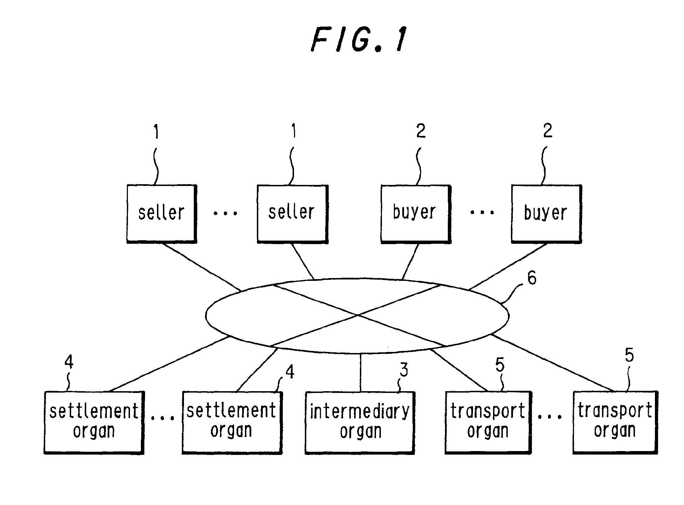

Fig. 1 shows an electronic commerce system according to an embodiment of the present invention. As is apparent from Fig. 1, the electronic commerce system according to this embodiment is constituted by seller terminals 1 provided by sellers, buyer terminals 2 provided by buyers, an intermediary organ 3 for making transactions between the sellers and the buyers, settlement organ terminals 4 provided by settlement organs for settling bills for the transactions, transport organ terminals 5 provided by transport organs for transporting items, and a two-way communication network 6 for connecting these terminals with the intermediary organ 3.

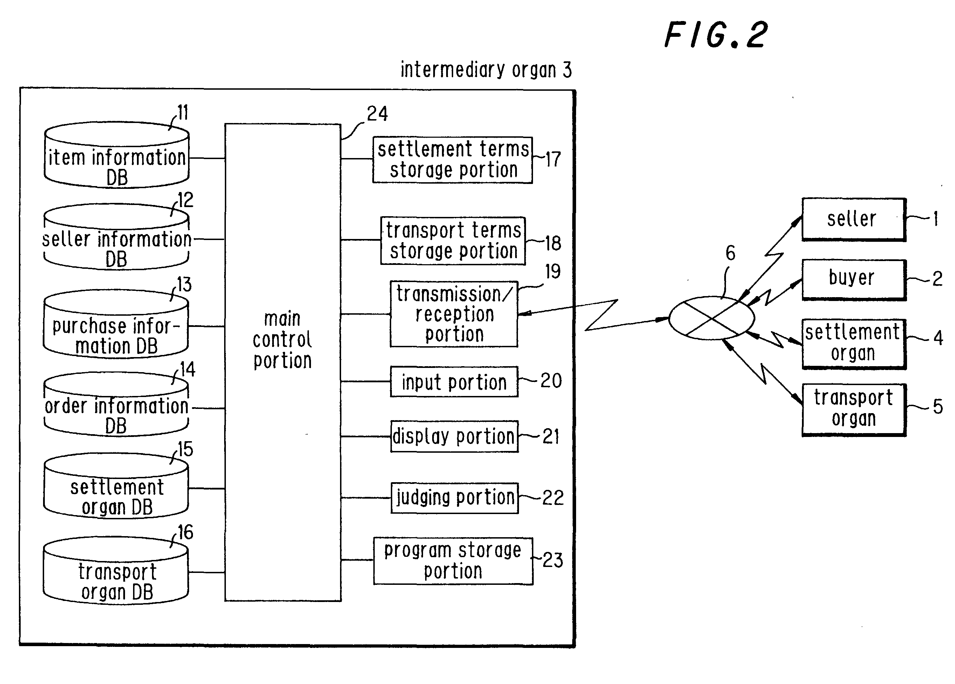

As shown in Fig. 2, the intermediary organ 3 has an item information DB (DB designates a data base. This applies hereinafter.) 11 for storing item information about new items which have not yet been on the market; a seller information DB 12 for storing information about the sellers registered in the intermediary organ 3; a purchase information DB 13 for storing purchase reservation information and purchase confirmation information from the buyer terminals 2; an order information DB 14 for storing order reservation information and order confirmation information from the seller terminals 1; a settlement organ DB 15 for storing information about the settlement organs registered in the intermediary organ 3; a transport organ DB 16 for storing information about the transport organs registered in the intermediary organ 3; a settlement terms storing portion 17 for storing information about settlement terms sent from the settlement organ terminals 4; a transport terms storing portion 18 for storing information about transport terms sent from the transport organ terminals 5; a transmission/reception portion 19 for transmitting/receiving information among the seller terminals 1, the buyer terminals 2, the settlement organ terminals 4 and the transport organ terminals 5; an input portion 20 constituted by a key board, a mouse-type input unit, or the like, for inputting necessary commands or information; a display portion 21 constituted by a CRT, a liquid-crystal display unit, or the like, for displaying necessary information; a judging portion 22 for automatically selecting optimum ones from the seller terminals 1, the settlement organ terminals 4 and the transport organ terminals 5 in the course of transactions; a program storage portion 23 for storing a necessary program; and a main control portion 24 for controlling the respective portions 11 to 23. The respective portions 11 to 23 are controlled by the main control portion 24 in compliance with the program stored in the program storage portion 23.

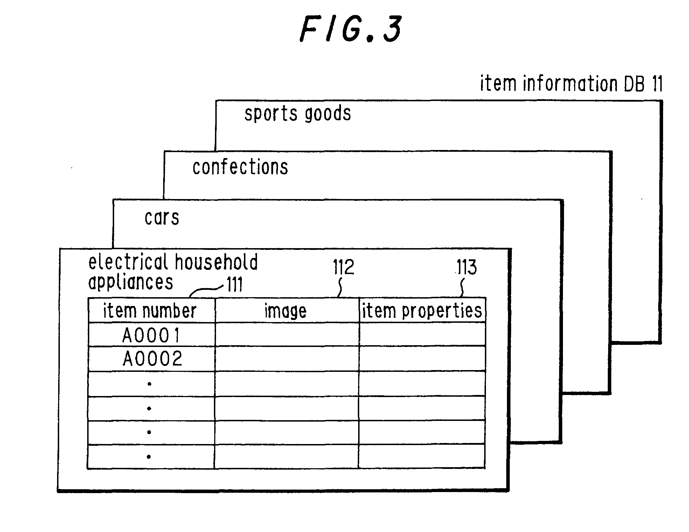

As shown in Fig. 3, item numbers 111 each assigned to one individual item in order to identify the items individually, images 112 showing the outside appearances of the items, item properties 113, and so on, are stored in the item information DB 11 by type of items (for example, electrical household appliances, cars, confections, sporting goods, etc.). Information about new items the sales of which have been announced by a seller but which have not yet been on the market and have not yet decided about their selling prices is basically stored in the item information DB 11. However, in accordance with necessity, such information may be kept for a certain period after the sale starts. In addition, information may be stored in the item information DB 11 by a clerk of the intermediary organ 3 by operating the input portion 18 or the like, or by a seller by operating the seller terminal 1. Of course, information may be stored in the item information DB 11 by both the intermediary organ 3 and the seller. In this case, the program stored in the program storage portion 23 is set to forbid the other of the intermediary organ 3 and the seller to record the same information again if the information of any new item has been stored by one of the intermediary organ 3 and the seller. When sellers are allowed to store information in the item information DB 11, the sellers can register item information about new items, which the sellers want to sell, surely in the item information DB 11 which is provided in the intermediary organ. Accordingly, there is an advantage that the sellers can surely obtain purchase reservation information from buyers through the intermediary organ 3. On the other hand, the intermediary organ 3 can save time and labor to search the new items and register them in the item information DB 11. Thus, the system can be operated efficiently.

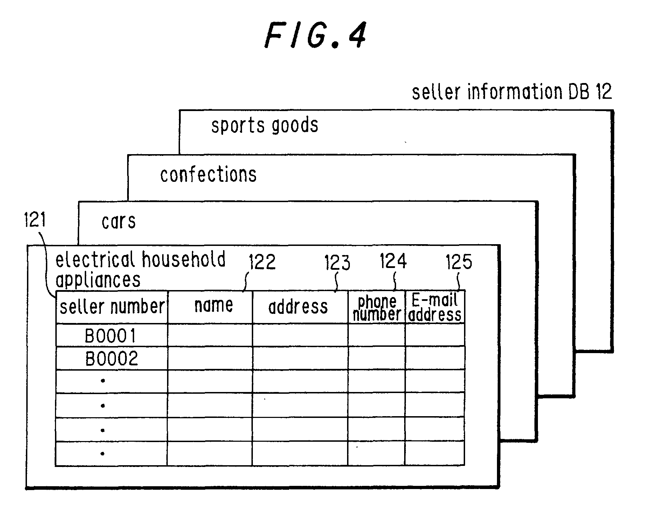

The seller information DB 12 is to store information about sellers who want to sell their items through the electronic commerce system according to the present invention. As shown in Fig. 4, seller numbers 121 each assigned to one individual seller in order to identify the sellers individually, names 122, addresses 123, phone numbers 124, and E-mail addresses 125, and so on, are stored in the seller information DB 12 by type of items. The seller information stored in the seller information DB 12 is concerned with sellers who have made applications for registrations to the intermediary organ 3 while specifying an item the sellers deal in, and whose registrations are approved. In order to enhance the reliability of transactions, the intermediary organ 3 examines the sellers who made applications, and registers, in the seller information DB 12, only sellers satisfying certain standards. Of course, each seller can make application for registration of a plurality of items.

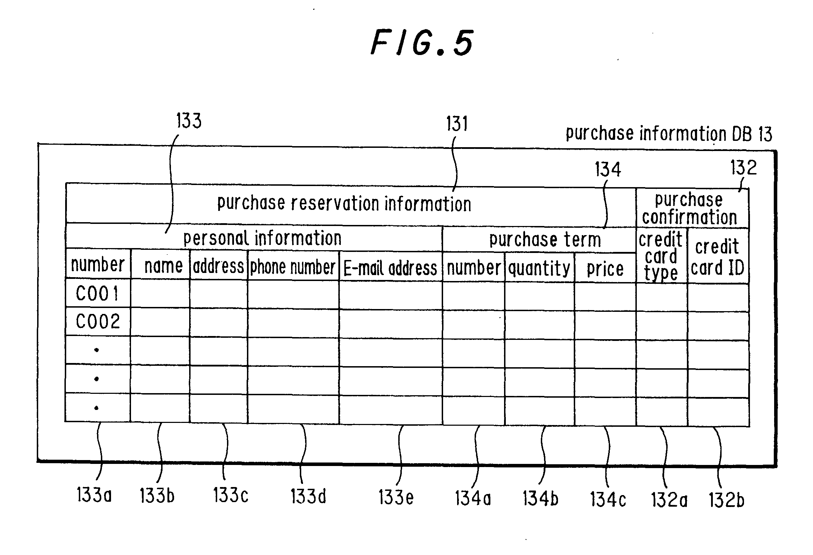

The purchase information DB 13 is to store information about buyers who want to buy new items through the electronic commerce system according to the present invention. As shown in Fig. 5, purchase reservation information 131 and purchase confirmation information 132 are stored in the purchase information DB 13. The purchase reservation information 131 is constituted by personal information 133 about buyers and purchase terms 134 for items. The personal information 133 about buyers includes buyer numbers 133a each assigned to one individual buyer in order to identify the buyers individually, names 133b, addresses 133c, phone numbers 133d; and E-mail addresses 133e. The purchase terms 134 includes item numbers 134a, quantities 134b, and desired purchase prices 134c. On the other hand, the purchase confirmation information 132 may include credit card types 132a, and credit card IDs 132b. When a settlement method without using any credit card is adopted, the recording area for the purchase confirmation information 132 may be formed as a flag area. Putting the flag "1" up in the flag area may indicate the state that the purchase confirmation information 132 has been received from the buyer terminal 2, while putting the flag "0" up may indicate the state that the purchase reservation information 131 has been received but the purchase confirmation information 132 has not yet been received.

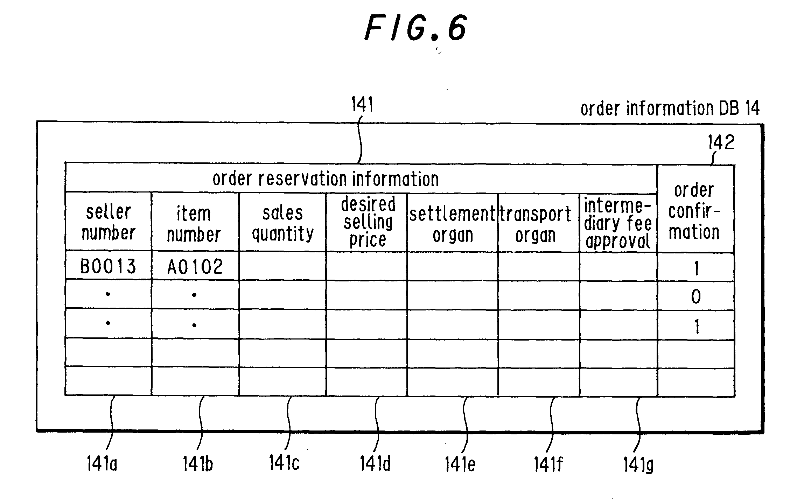

As shown in Fig. 6, order reservation information 141 and order confirmation information 142 from the seller terminals 1 are stored in the order information DB 14. The order reservation information 141 includes seller numbers 141a, item numbers 141b, sales quantities 141c, desiredsellingprices 141d, existence/absence of settlement organ intermediary request 141e, existence/absence of transport organ intermediary request 141f, and existence/absence of fee approval 141g. Each of the storage areas for the existence/absence of settlement organ intermediary request 141e, the existence/absence of transport organ intermediary request 141f, the existence/absence of fee approval 141g, and the order confirmation information 142 may be formed as a flag area. For example, as shown in Fig. 6, putting the flag "1" up in the storage area of the order confirmation information 142 may indicate the state that the order confirmation information 142 has been received from the seller terminal 1, while putting the flag "0" up may indicate the state that the order reservation information 141 has been received but the order confirmation information 142 has not yet been received.

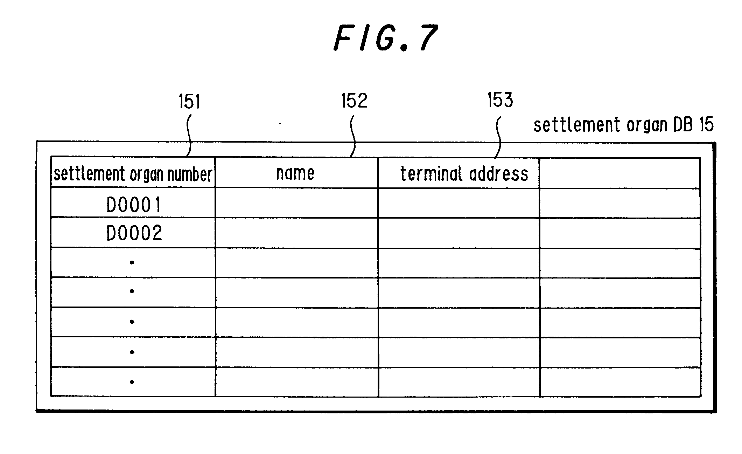

The settlement organ DB 15 is to store information about settlement organs who want to settle transactions through the electronic commerce system according to the present invention. As shown in Fig. 7, settlement organ numbers 151 each assigned to one individual settlement organ in order to identify the settlement organs individually, names 152, main/branch office terminal addresses 153, and so on, are stored in the settlement organ DB 15. The settlement organ information stored in the settlement organ DB 15 is concerned with settlement organs who have made applications for registrations to the intermediary organ and whose registrations are approved. In order to enhance the reliability of transactions, the intermediary organ 3 examines the settlement organs who have made applications, and registers, in the settlement organ DB 15, only settlement organs satisfying certain standards.

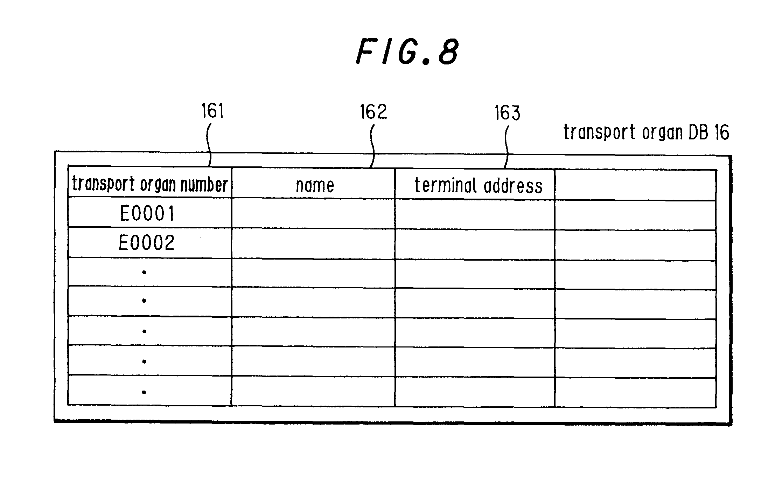

The transport organ DB 16 is to store information about transport organs who want to transport items dealt in through the electronic commerce system according to the present invention. As shown in Fig. 8, transport organ numbers 161 each assigned to one individual transport organ in order to identify the transport organs individually, names 162, main/branch office terminal addresses 163, and so on, are stored in the transport organ DB 16. The transport organ information stored in the transport organ DB 16 is concerned with transport organs who have made applications for registrations to the intermediary organ and whose registrations are approved. In order to enhance the reliability of transactions, the intermediary organ 3 examines the transport organs who have made applications, and registers, in the transport organ DB 16, only transport organs satisfying certain standards.

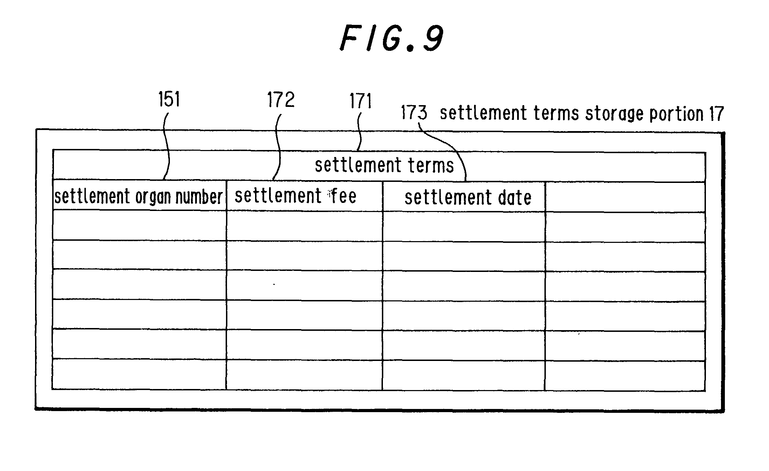

As shown in Fig. 9, settlement terms 171 sent from the settlement organ terminals 4 for every transaction are stored in the settlement terms storage portion 17. The settlement terms 171 include settlement organ numbers 151, settlement fees 172, and settlement dates 173.

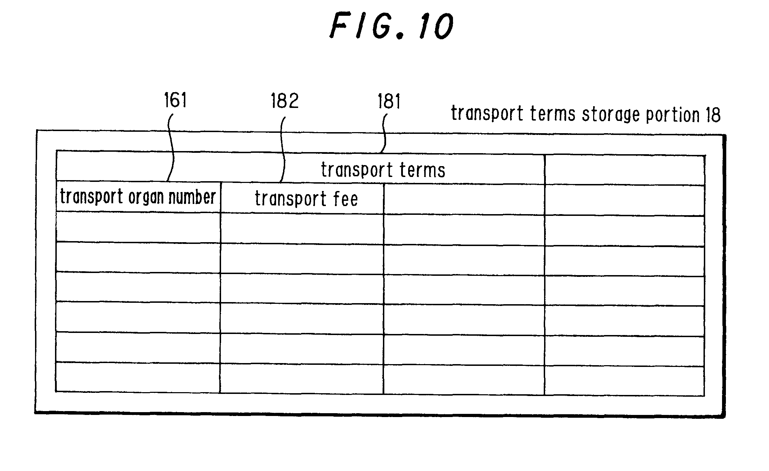

As shown in Fig. 10, transport terms 181 sent from the transport organ terminals 5 for every transaction are stored in the transport terms storage portion 18. The transport terms 181 include transport organ numbers 161 and transport fees 182.

The transmission/reception portion 19 transmits and receives information by a Web engine etc. for setting up a homepage on the two-way communication network 6, or by a WWW browser etc. for connecting with the seller terminals 1, the buyer terminals 2, the settlement organs 4 and the transport organs 5 through the two-way communication network 6.

The judging portion 22 is constituted by a not-shown CPU, a memory accompanied with the CPU, and so on. The judging portion 22 performs: selection of a seller sending the order reservation information 141 which is the most advantageous to buyers; selection of a settlement organ sending the settlement terms 171 which are the most advantageous to buyers; and selection of a transport organ sending the transport terms 181 which are the most advantageous to buyers; and so on. The method of judgement by the judging portion 22 will be explained more in detail in the following description of the operation.

Besides, the input portion 20, the display portion 21, the program storage portion 23 and the main control portion 24 which are provided in the intermediary organ 3 are based on known technology, and are not essential for the present invention. Therefore, the description of those portions are omitted.

A computer which has a body portion, a display unit and an input unit and which can transmit and receive information with the intermediary organ 3 through the two-way communication network 6 by a WWW browser or the like is used as each of the seller terminals 1, the buyer terminals 2, the settlement organ terminals 4 and the transport organ terminals 5. The specific configuration of the computer is based on known technology and is not essential for the present invention. Therefore, the description of the portion and units are omitted.

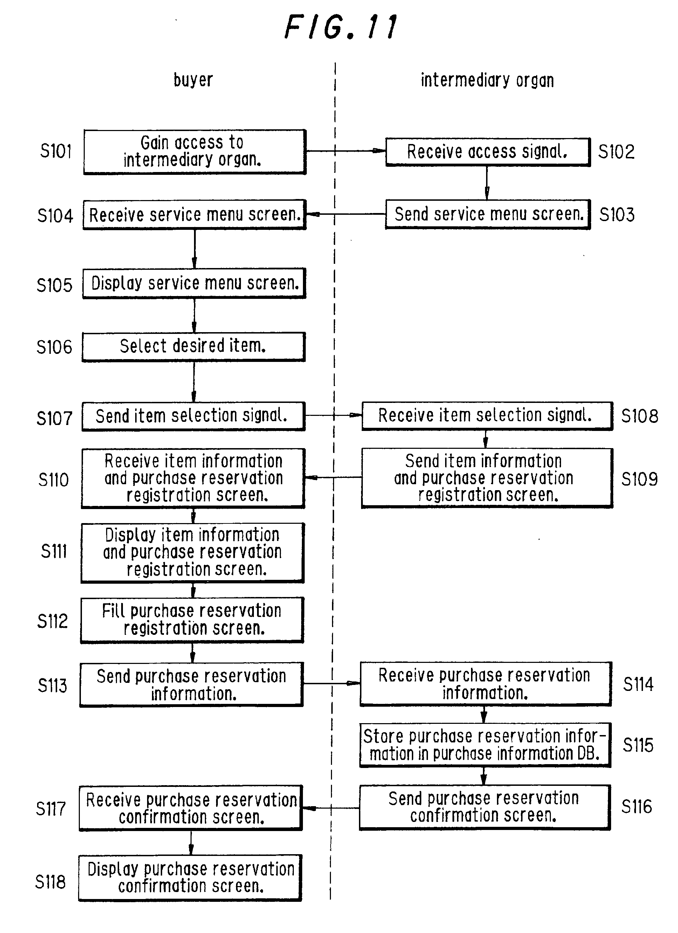

The procedure of transaction through the electronic commerce system configured thus will be described with reference to Figs. 11 to 21.

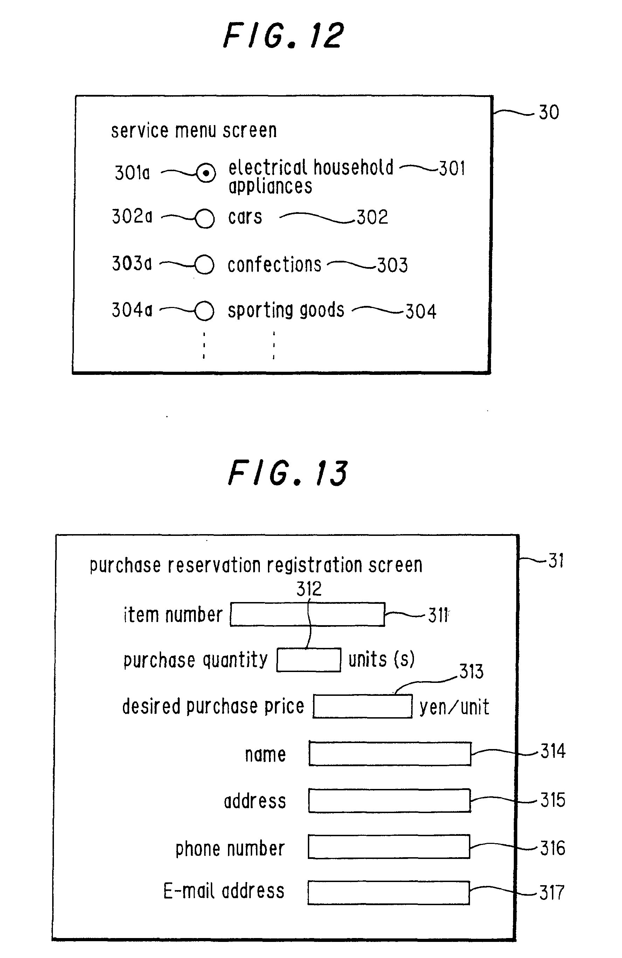

First, in the flow chart of Fig. 11, when a buyer operates his/her buyer terminal 2 so as to gain access to the intermediary organ 3 (S101), the intermediary organ 3 receives an access signal from the buyer terminal 2 (S102), and sends the buyer terminal 2 a service menu screen 30 exemplified in Fig. 12 (S103). This service menu screen 30 is received in the buyer terminal 2 (S104), and displayed on a display unit of the buyer terminal 2 (S105).

In the service menu screen 30, there appear types 301, 302, 303... of items dealt in by the intermediary organ 3, and selective input sections 301a, 302a, 303a... for the individual item types, as shown in Fig. 12. The buyer operates the buyer terminal 2 so as to select one of the item types, for example, the electrical household appliances 301, and check off the selective input section 301a to the selection (S106). When an item selection signal is sent in response to the operation (S107), the intermediary organ 3 receives the item selection signal (S108). The intermediary organ 3 sends the buyer terminal 2 item information of the electrical household appliances read from the item information DB 11, together with a purchase reservation registration screen 31 exemplified in Fig. 13 (S109). The respective screens are received in the buyer terminal 2 (S110), and displayed on the display unit of the buyer terminal 2 (S111).

As shown in Fig. 13, the purchase reservation registration screen 31 is provided with an item number input section 311, a purchase quantity input section 312, a desired purchase price input section 313, a name input section 314, an address input section 315, a phone number input section 316, and an E-mail address input section 317. When the buyer fills all the sections (S112) and sends them (S113), the intermediary organ 3 receives them as purchase reservation information (S114), and stores the purchase reservation information in the purchase information DB 13 (S115).

Then, the intermediary organ 3 sends the buyer terminal 2 a purchase reservation confirmation screen including the received purchase reservation information (S116). The buyer terminal 2 receives this purchase reservation confirmation screen (S117), and displays it on the display unit (S118). Thus, the buyer completes the purchase reservation in the intermediary organ 3 for the desired item.

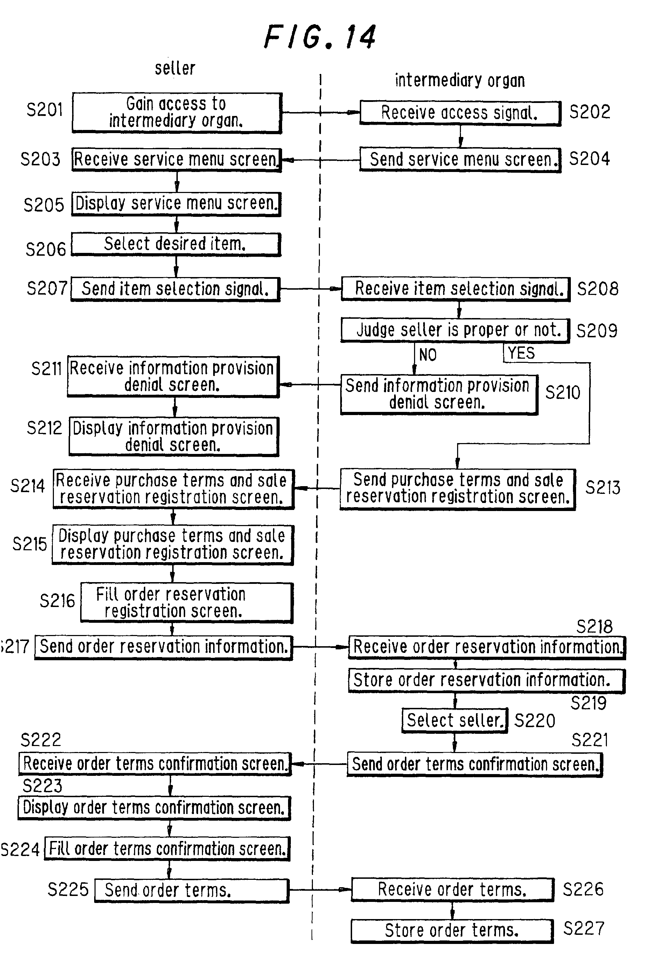

Next, in the flow chart of Fig. 14, when a seller operates his/her seller terminal 1 so as to gain access to the intermediary organ 3 (S201), the intermediary organ 3 receives an access signal from the seller terminal 1 (S202), and sends the seller terminal 1 the service menu screen 30 exemplified in Fig. 12 (S203). The service menu screen 30 is received in the seller terminal 1 (S204), and displayed on a display unit of the seller terminal 1 (S205).

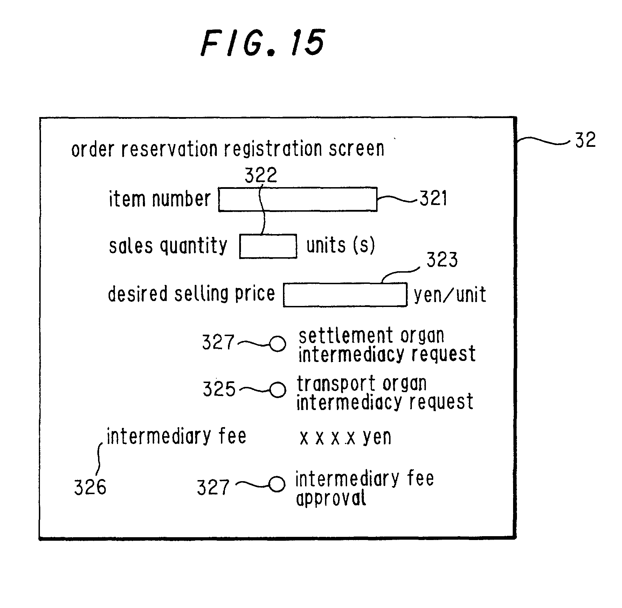

The seller operates the seller terminal 1 so as to select one of the item types, for example, the electrical household appliances 301 (S206). When an item selection signal is sent in response to the operation (S207), the intermediary organ 3 receives the item selection signal (S208). The intermediary organ 3 makes the judging portion 22 judge whether the seller who sent the item selection signal and the item selected by the item selection signal from the seller have been registered in the seller information DB 12 or not (S209). When the seller who sent the item selection signal is judged to be not a seller registered in the seller information DB 12 with respect to the selected item, the intermediary organ 3 sends a purchase reservation information provision denial screen to the seller terminal 1 which sent the item selection signal (S210). The provision denial screen is received in the seller terminal (S211), and displayed on the display unit of the seller terminal 1 (S212). When the seller who sent the item selection signal is judged to be a seller registered in the seller information DB 12 with respect to the selected item in the step S209, the intermediary organ 3 sends the seller terminal 1 the purchase terms 134 of the buyer with respect to the electrical household appliances which purchase terms are read from the purchase information DB 13 (see Fig. 5), together with an order reservation registration screen 32 exemplified in Fig. 15 (S213). The respective screens are received in the seller terminal 1 (S214), and displayed on the display unit of the seller terminal 1 (S215).

As shown in Fig. 15, the order reservation registration screen 32 is provided with an item number input section 321, a sales quantity input section 322, a desired selling price input section 323, a settlement organ intermediacy request input section 324, a transport organ intermediacy request input section 325, an intermediary fee display section 326, and an intermediary fee approval input section 327. When the seller fills all the sections (S216) and sends them (S217), the intermediary organ 3 receives them as order reservation information (S218), and stores the purchase reservation information in the order information DB 14 together with the seller number (S219).

The intermediary organ 3 which received the purchase reservation information makes the judging portion 22 select a seller who has sent the lowest of the desired selling prices stored in the order information DB 14 (S220). The intermediary organ 3 sends an order terms confirmation screen including an order confirmation input section, to the seller terminal 1 of the seller who sent the lowest desired selling price (S221). The seller terminal 1 receives this order terms confirmation screen (S222), and displays it on the display unit (S223). When the seller checks off the order confirmation input section provided in the order terms confirmation screen (S224), and sends it as a signal (S225), the signal is received in the intermediary organ 3 (S226) and stored in the order information DB 14 (S227). Thus, the seller completes the order reservation in the intermediary organ 3.

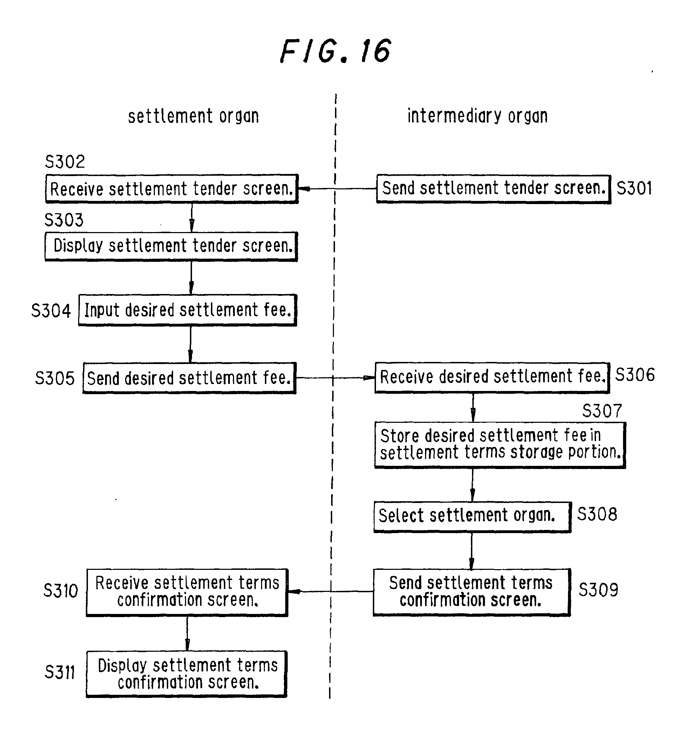

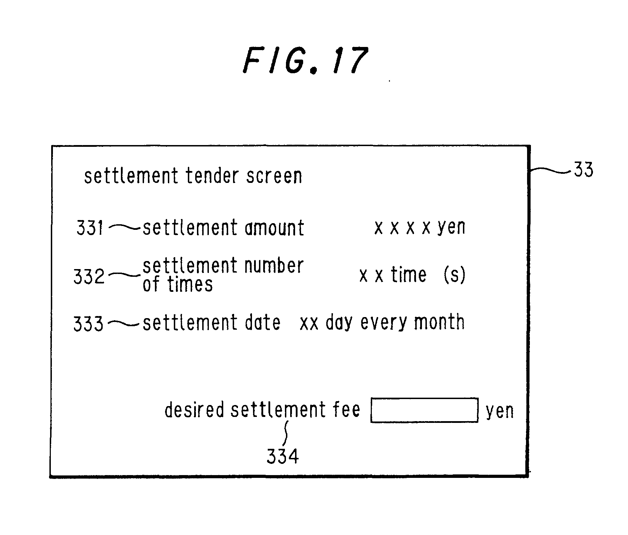

Next, in the flow chart of Fig. 16, the intermediary organ 3 which received a settlement organ intermediacy request from the seller sends a settlement tender screen 33 exemplified in Fig. 17, to all settlement organs registered in the settlement organ DB 15 (S301). This settlement tender screen 33 is received in all the settlement organ terminals 4 (S302), and displayed on display units of all the settlement organ terminals 4 (S303).

As shown in Fig. 17, the settlement tender screen 33 is provided with a settlement amount display section 331, a payment number-of-times display section 332, settlement date display section 333, and a desired settlement fee input section 334. When each of the settlement organs inputs a desired settlement fee into the desired settlement fee input section 334 (S304) and sends it (S305), the intermediary organ 3 receives it (S306), and stores it in the settlement terms storage portion 17 together with the settlement organ number (S307). Then, the intermediary organ 3 makes the judging portion 22 select a settlement organ which sent the lowest of the desired settlement fees stored in the settlement terms storage portion 17 (S308). The intermediary organ 3 sends a settlement terms confirmation screen to the settlement organ terminal 4 of the settlement organ which sent the lowest desired settlement fee (S309). The settlement organ terminal 4 receives this settlement terms confirmation screen (S310), and displays it on the display unit (S311). Thus, the selection of the settlement organ is completed.

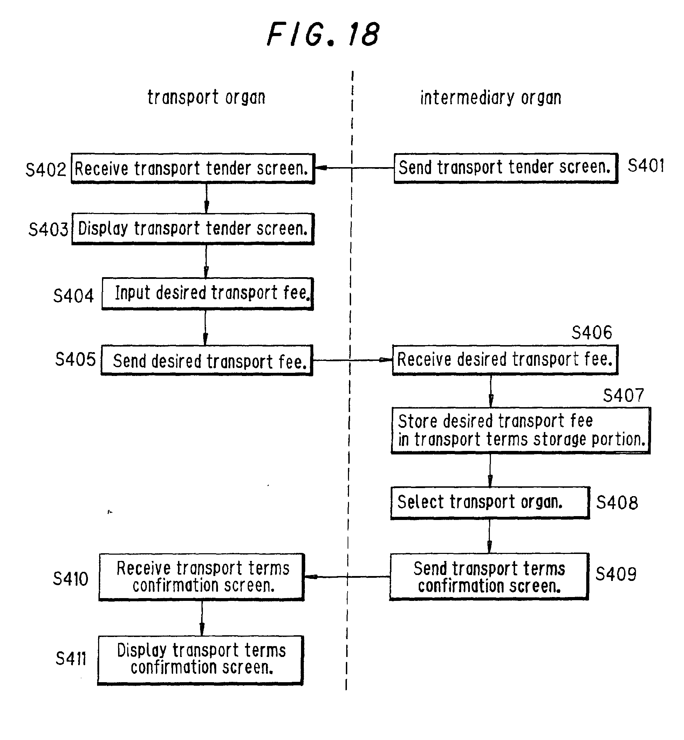

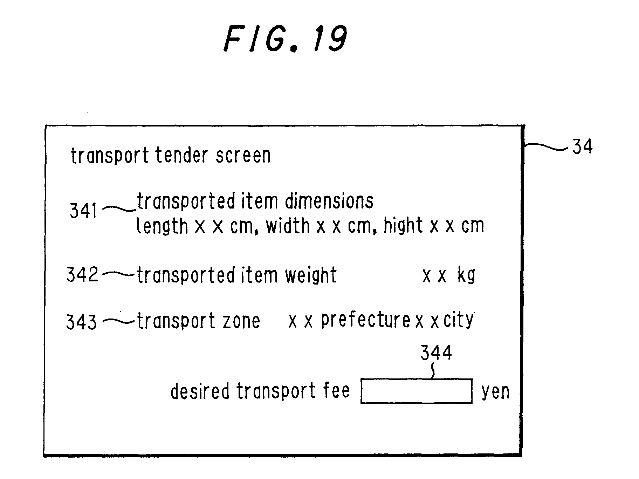

Next, in the flow chart of Fig. 18, the intermediary organ 3 which has received a transport organ intermediacy request from the seller sends a transportation tender screen 34 exemplified in Fig. 19, to all transport organs registered in the transport organ DB 16 (S401). This transportation tender screen 34 is received in all the transport organ terminals 5 (S402), and displayed on display units of the transport organ terminals 5 (S403).

As shown in Fig. 19, the transportation tender screen 34 is provided with a transported item dimension display section 341, a transported item weight display section 342, a transport zone display section 343, and a desired transport fee input section 344. When each of the transport organs inputs a desired transport fee into the desired transport fee input section 344 (S404) and sends it (S405), the intermediary organ 3 receives it (S406), and stores it in the transport terms storage portion 18 together with the transport organ number (S407). Then, the intermediary organ 3 makes the judging portion 22 select a transport organ which has sent the lowest of the desired transport fees stored in the transport terms storage portion 18 (S408). The intermediary organ 3 sends a transport terms confirmation screen to the transport organ terminal 5 of the transport organ which sent the lowest desired transport fee (S409). The transport organ terminal 5 receives this transport terms confirmation screen (S410), and displays it on the display unit (S411). Thus, the selection of the transport organ is completed.

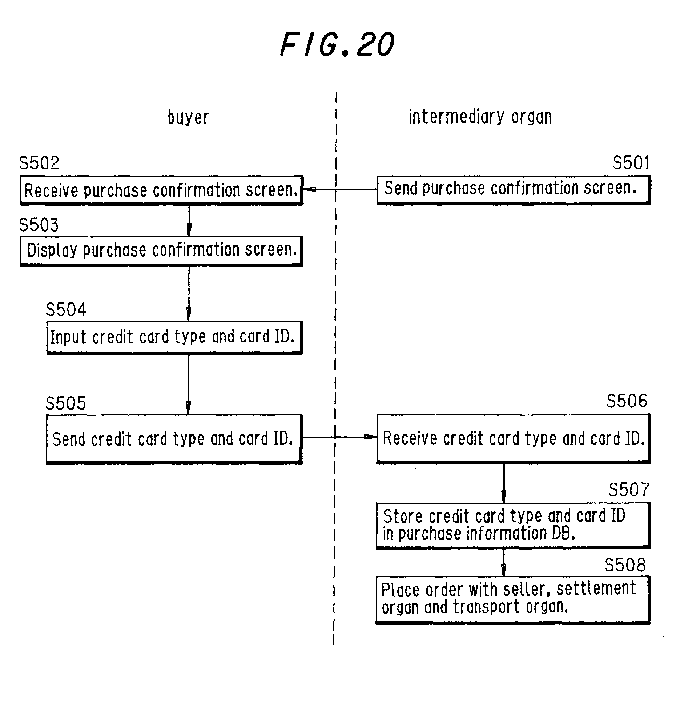

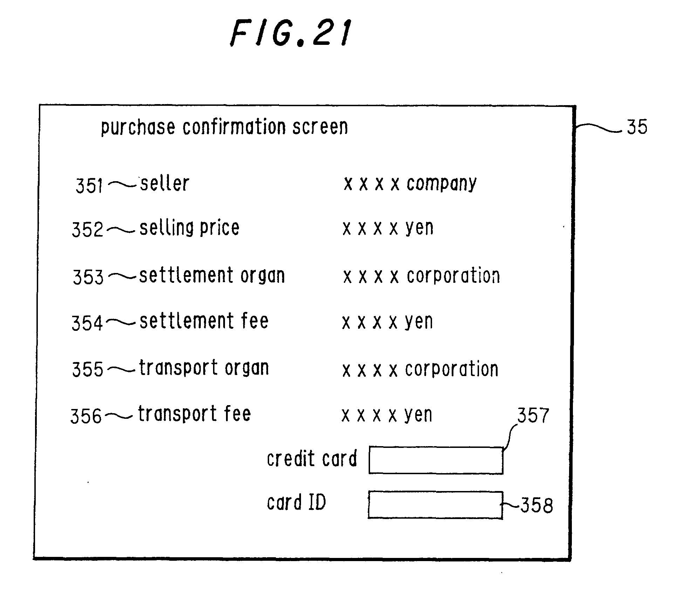

Next, in the flow chart of Fig. 20, the intermediary organ 3 sends the buyer terminal 2 a purchase confirmation screen 35 exemplified in Fig. 21 (S501). This purchase confirmation screen 35 is received in the buyer terminal 2 (S502), and displayed on the display unit of the buyer terminal 2 (S503).

The purchase confirmation screen 35 is provided with a seller display section 351, a selling price display section 352, a settlement organ display section 353, a settlement fee display section 354, a transport organ display section 355, a transport fee display section 356, a credit card type input section 357, a card ID input section 358, and a purchase will confirmation section 358. When the buyer fills all the sections (S504) and sends them (S505), the intermediary organ 3 receives them as purchase confirmation information (S506), and stores the purchase confirmation information in the purchase information DB 13 (S507).

The intermediary organ 3 sends necessary order information including personal information stored in the purchase information DB 13, to the seller selected in the step S220, the settlement organ selected in the step S308, and the transport organ selected in the step S408 (S508). Thus, a transaction takes place.

Although the intermediary organ 3 selects a settlement organ and a transport organ in the aforementioned embodiment, a seller can designate a settlement organ and a transport organ.

In the aforementioned embodiment, a buyer gains access to the intermediary organ 3 so as to take item information stored in the intermediary organ 3 into the buyer terminal 2, and a seller gains access to the intermediary organ 3 so as to take item reservation information stored in the intermediary organ 3 into the seller terminal 1. However, in place of such a configuration, the intermediary organ may regularly or not-regularly send item information or item reservation information, in the form of E-mail, to users and sellers registered in the intermediary organ 3 in advance.

Further, information of new items examined and collected by the intermediary organ 3 is stored in the item information DB 11 in the aforementioned embodiment. However, in place of such a configuration, sellers may write information about new items into the item information DB 11.

According to the invention stated in Claim 1, buyers can obtain information about various new items simply by gaining access to one intermediary organ, and can make a purchase reservation for new items which have not yet been on the market, simply by exchanging necessary information with the intermediary organ. Accordingly, the buyers can obtain new items easily. On the other hand, sellers can obtain, from the intermediary organ, the state of reservations about new items which have not yet been on the market. Accordingly, the sellers can collect basic data required for production plans or inventory control plans, or price setting, or the like, about the new items. Further, the intermediary organ can obtain intermediary fees from the sellers.

According to the invention stated in Claim 2, the intermediary organ can present the buyers the settlement terms which are the most advantageous to the buyers, so that the intermediary organ can get trust from the buyers, and the buyers can make settlement for item purchase on the most advantageous terms. On the other hand, even if sellers have no price collection system such as consignment sale companies or the like, bills can be collected surely because the intermediary organ specifies a settlement organ for the sellers.

According to the invention stated in Claim 3, the intermediary organ can present show the buyers the transport terms which are the most advantageous to the buyers, so that the intermediary organ can get trust from the buyers, and the buyers can accept transportation of items on the most advantageous terms. On the other hand, even if sellers have no physical distribution system such as consignment sale companies or the like, items can be transported to the buyers surely because the intermediary organ specifies a transport organ for the sellers.

According to the invention stated in Claim 4, purchase reservation information is distributed to the seller terminals regularly or not-regularly, so that the sellers can save time and labor to gain access to the intermediary organ, and can obtain the purchase reservation information surely.

According to the invention stated in Claim 5, item information is distributed to the registered buyer terminals regularly or not-regularly, so that the buyers can save time and labor to gain access to the intermediary organ, and can obtain the item information about new items surely.

According to the invention stated in Claim 6, the sellers can register item information about new items , which the sellers want to sell, in the item information storage means provided in the intermediary organ. Thus, the sellers can obtain purchase reservation information from buyers through the intermediary organ. In addition, the intermediary organ can save time and labor to search the new items and register them in the item information storage means. Thus, the system can be operated efficiently.

## Claims

1. An electronic commerce system for new items comprising seller terminals, buyer terminals, an intermediary organ for making intermediacy for transactions among sellers and buyers, and a two-way communication network for connecting said seller terminals , said buyer terminals and said intermediary organ with one another, said intermediary organ including:
item information storage means for storing item information about new items which have not yet been on the market;
seller information storage means for storing information about said sellers registered in said intermediary organ;
purchase reservation information storage means for storing purchase reservation information from said buyer terminals;
purchase confirmation information storage means for storing purchase confirmation information from said buyer terminals;
order reservation information storage means for storing order reservation information from said seller terminals;
order confirmation information storage means for storing order confirmation information from said seller terminals;
item information sending means for sending necessary item information read from said item information storage means to said buyer terminals in response to requests from said buyer terminals;
purchase reservation information sending means for sending necessary purchase reservation information read from said purchase reservation information storage means to said seller terminals in response to requests from said seller terminals;
judging means for selecting a seller terminal sending order reservation information most suitable to said purchase reservation information on the basis of said order reservation information stored in said order reservation information storage means;
intermediary terms sending means for sending information about intermediary terms claimed by said intermediary organ to said seller terminal selected by said judging means; and
control means for controlling said respective means.

2. An electronic commerce system for new items according to Claim 1, wherein:
a plurality of settlement organs for making settlement of transactions are connected to said two-way communication network; and
said intermediary organ includes:
settlement organ information storage means for storing information about said settlement organs registered in said intermediary organ;
transaction information sending means for sending transaction information to be settled to said settlement organs stored in said settlement organ information storage means;
settlement terms storage means for storing information about settlement terms from said settlement organs to which said transaction information has been sent;
judging means for selecting a settlement organ sending settlement terms most advantageous to said buyers on the basis of said settlement terms stored in said settlement terms storage means; and
settlement commission information sending means for sending settlement commission information to said settlement organ selected by said judging means.

3. An electronic commerce system for new items according to Claim 1, wherein:
a plurality of transport organs for transporting items are connected to said two-way communication network; and
said intermediary organ includes:
transport organ information storage means for storing information about said transport organs registered in said intermediary organ;
transported item information sending means for sending information about items to be transported to said transport organs stored in said transport organ information storage means;
transport terms storage means for storing information about transport terms from said transport organs to which said transported item information has been sent;
judging means for selecting a transport organ sending transport terms most advantageous to said buyers on the basis of said transport terms stored in said transport terms storage means; and
transport commission information sending means for sending transport commission information to said transport organ selected by said judging means.

4. An electronic commerce system for new items according to Claim 1, wherein said intermediary organ includes:
purchase reservation information distributing means for distributing purchase reservation information read from said purchase reservation information storage means to said seller terminals regularly or not-regularly.

5. An electronic commerce system for new items according to Claim 1, wherein said intermediary organ includes:
buyer information storage means for storing information about said buyers registered in said intermediary organ; and
item information distributing means for distributing necessary item information read from said item information storage means to said buyer terminals regularly or not-regularly.

6. An electronic commerce system for new items according to Claim 1, wherein said seller terminals include:
new item information sending means for sending, to said intermediary organ, information about new items which said sellers want to sell.
